# EUROPEAN PATENT APPLICATION

(11) **EP 4 299 312 A1**
(43) Date of publication of application: **03.01.2024**
(21) Application number: 22759375.3
(22) Date of filing: 09.02.2022
(51) Int. Cl.: B32B 27/30, C08F 20/30, B32B 7/027

(54) **FILM MATERIAL AND LAMINATED MATERIAL**

(30) Priority: 26.02.2021 JP 2021030838
(71) Applicant: Panasonic Intellectual Property Management Co., Ltd., Osaka 571-0057 (JP)
(72) Inventor: IKOMA, Yoshimitsu, Kadoma-shi Osaka 571-0057 (JP); KAWASUMI, Yuna, Kadoma-shi Osaka 571-0057 (JP); IWATA, Koki, Kadoma-shi Osaka 571-0057 (JP); IBI, Hidemi, Kadoma-shi Osaka 571-0057 (JP)
(74) Representative: Müller-Boré & Partner Patentanwälte PartG mbB
(86) International application number: PCT/JP2022/005091
(87) International publication number: WO 2022/181336

(57) **Abstract**

The present disclosure provides a film material which is configured to develop good moldability when heated. A film material according to the present disclosure includes an amorphous polymer (A) including a reversible bond which is reversibly dissociated and recombined in response to a temperature change. The polymer (A) has a glass transition temperature of higher than or equal to 40°C. The polymer (A) has a storage elastic modulus of greater than or equal to 0.2 MPa at a temperature higher than the glass transition temperature by 100°C and a storage elastic modulus of less than or equal to 100 MPa at a temperature higher than the glass transition temperature by 50°C.

## Description

### Technical Field

The present disclosure relates to film materials and laminated materials and specifically relates to a film material applicable to lamination applications and a laminated material including the film material.

### Background Art

Patent Literature 1 discloses, as a laminated film for use in decorative molding, a laminated film including a base material layer and a thermosetting hard coating layer which are stacked one on top of another. It is also disclosed that the thermosetting hard coating layer is made of a thermosetting hard coating agent containing a resin having a diene structure and a hardener having two or more maleimide structures.

### Citation List

### Patent Literature

Patent Literature 1: JP 2019-116614 A

### Summary of Invention

It is an object of the present disclosure to provide: a film material configured to develop good moldability when heated; and a laminated material including the film material.

A film material according to an aspect of the present disclosure includes a polymer (A) being amorphous and including a reversible bond which is reversibly dissociated and recombined in response to a temperature change. The polymer (A) has a glass transition temperature of higher than or equal to 40°C. The polymer (A) has a storage elastic modulus of greater than or equal to 0.2 MPa at a temperature higher than the glass transition temperature by 100°C and a storage elastic modulus of less than or equal to 100 MPa at a temperature higher than the glass transition temperature by 50°C.

A laminated material according to an aspect of the present disclosure includes a base material containing a thermoplastic resin and the film material on the base material.

### Description of Embodiments

According to the inventors' own search, when the thermosetting hard coating layer disclosed in Patent Literature 1 (JP 2019-116614 A) is heated for decorative molding, a bond between the resin and the hardener is dissociated, and the thermosetting hard coating layer thus becomes deformable. However, a rising temperature may excessively reduce the viscosity of the thermosetting hard coating layer, which may cause a defect, such as a non-uniform thickness of the thermosetting hard coating layer or a breakoff of the thermosetting hard coating layer, at the time of molding. Therefore, the inventors conducted research and development to provide: a film material configured to develop good moldability when heated; and a laminated material including the film material, and the inventors acquired the basic idea of the present disclosure. Note that the above explanation as to how the inventors acquired the basic idea of the present disclosure is not intended to limit the scope of the present disclosure.

An embodiment of the present disclosure will be described below. Note that the embodiment described below is a mere example of various embodiments of the present disclosure, and the present disclosure may be modified in various manners depending on design. Note that in the following description, "(meth)acry" represents a generic concept comprehending "acry" and "methacry" or alternatively means at least one of "acry" or "methacry".

A film material according to the present embodiment includes a polymer (A) being amorphous and including a reversible bond which is reversibly dissociated and recombined in response to a temperature change. The polymer (A) has a glass transition temperature of higher than or equal to 40°C. The polymer (A) has a storage elastic modulus (E'₁₀₀) of greater than or equal to 0.2 MPa at a temperature higher than the glass transition temperature by 100°C and a storage elastic modulus (E'₅₀) of less than or equal to 100 MPa at a temperature higher than the glass transition temperature by 50°C.

Therefore, in the present embodiment, when the film material is heated, good moldability can be developed. The reason for this is probably as follows. In the present embodiment, heating causes the reversible bond to be dissociated, the film material is deformable by heating because the storage elastic modulus (E'₅₀) is less than or equal to 100 MPa, and the film material is suppressed from excessively deforming even with a rising temperature of the film material because the storage elastic modulus (E'₁₀₀) is greater than or equal to 0.2 MPa. Therefore, the film material can develop good moldability over a wide temperature range. Moreover, when the temperature of the film material decreases after molding, recombination of the reversible bond occurs, and because the glass transition temperature is higher than or equal to 40°C, the film material becomes hardly deformable, and properties such as agent resistance can be developed.

Note that in the present specification, the thickness of the film material is not limited, and the film material may include materials as sheets, films, and membranes. The thickness of the film material is, for example, greater than or equal to 1 µm and less than or equal to 1000 µm. The thickness of the film material may be greater than or equal to 10 µm or may be greater than or equal to 50 µm. Moreover, the thickness of the film material may be less than or equal to 800 µm or may be less than or equal to 500 µm.

Note that the glass transition temperature, the storage elastic modulus (E'₁₀₀), and the storage elastic modulus (E'₅₀) of the polymer (A) are obtained by dynamic viscoelastic measurement in an atmosphere, under atmospheric pressure, and with 65% humidity under conditions with a measurement temperature range from 25°C to 200°C, and a rate of temperature rise of 10°C/min. An example of the specific measuring method is presented under "Examples".

The glass transition temperature of the polymer (A) is more preferably higher than or equal to 40°C, and much more preferably higher than or equal to 60°C. In this case, the film material becomes less deformable at an ordinary temperature, and properties such as agent resistance can be more developed. Moreover, the glass transition temperature is preferably lower than or equal to 170°C, more preferably lower than or equal to 150°C, and much more preferably lower than or equal to 130°C. In this case, good moldability can be more developed when the film material is heated.

The storage elastic modulus (E'₁₀₀) of the polymer (A) is more preferably greater than or equal to 0.2 MPa. In this case, the film material is less likely to be excessively deformed when the temperature of the film material rises. The storage elastic modulus (E'₁₀₀) is more preferably greater than or equal to 0.3 MPa.

Moreover, the storage elastic modulus (E'₁₀₀) is, for example, less than or equal to 100 MPa, more preferably less than or equal to 20 MPa, and much more preferably less than or equal to 10 MPa. In this case, good moldability can be more developed when the film material is heated.

The storage elastic modulus (E'₅₀) of the polymer (A) is more preferably less than or equal to 20 MPa. In this case, heating enables the film material to more easily deform. The storage elastic modulus (E'₅₀) is much more preferably less than or equal to 10 MPa.

Moreover, the storage elastic modulus (E'₅₀) is, for example, greater than or equal to 0.2 MPa, more preferably greater than or equal to 0.3 MPa, and much more preferably greater than or equal to 0.5 MPa. In this case, good moldability can be more developed when the film material is heated.

A more specific structure of the polymer (A) will be described.

The reversible bond in the polymer (A) is preferably an ester bond. In this case, the film material can develop good agent resistance. Moreover, it is achieved that the storage elastic modulus (E'₁₀₀) of the polymer (A) is greater than or equal to 0.2 MPa, and an excessive deformation of the film material due to a temperature rise is particularly unlikely to be produced. This is probably because even when the ester bond is dissociated along with the temperature rise, a loose bond by association is maintained. Note that the reversible bond does not have to be the ester bond. For example, the reversible bond may be, for example, a urethane bond, a boronic acid ester bond, or a silyl ether bond. These bonds may also be dissociated and recombined through a similar mechanism to the ester bond.

The polymer (A) preferably includes zinc as an element included in the polymer (A). In this case, the moldability of the film material can be increased. This is probably because zinc acts as a catalyst for dissociation and recombination of a reversible bond, in particular ester bond. Moreover, the agent resistance of the film material can be particularly increased. This is probably because when zinc is held in the polymer (A), the zinc is less likely to be affected by an agent(s). The zinc included in the polymer (A) may be a zinc ion. For example, the polymer (A) includes a zinc ion and a carboxylate anion group coordinated to the zinc ion.

Note that the film material may contain zinc which is not included in the polymer (A). Also in this case, the moldability of the film material can be more increased. That is, as long as the film material contains zinc, the moldability of the film material can be more increased, regardless of whether or not the zing is included in the polymer (A). This is probably because even when the zinc is not included in the polymer (A), the zinc can function as a catalyst. In the film material, zinc may be an elementary substance or an ion, or a compound included in the film material may include zinc as a constituent element of the compound as in the case where the zinc is included in the polymer (A).

It is also preferable that the polymer (A) includes a hydroxyl group. In this case, the moldability of the film material can be more increased. This is probably because the hydroxyl group also acts to promote dissociation and recombination of a reversible bond, in particular, an ester bond.

The polymer (A) is, for example, a polymer of a polymerizable compound (a). The polymerizable compound (a) may contain at least one type of monomer, oligomer, or prepolymer.

The polymerizable compound (a) preferably contains a compound (a1) including an ester bond and an ethylenically unsaturated bond. In this case, the compound (a1) is polymerized by the ethylenically unsaturated bond, thereby constituting the polymer (A), and the polymer (A) can have an ester bond derived from the compound (a1).

The compound (a1) preferably contains a compound including a hydroxyl group. In this case, the polymer (A) can have a hydroxyl group derived from the compound (a1).

The compound (a1) contains at least one of a compound (a11) including only one ester bond in one molecule or a compound (a12) including at least two ester bonds in one molecule.

In particular, when the compound (a1) contains the compound (a12), the excessive deformation of the film material due to the temperature rise is particularly unlikely to be produced, and the polymer (A) is unlikely to pyrolyzed. This is probably because an increased number of ester bonds in the polymer (A) results in a high ratio of undissociated ester bonds to the ester bonds in the polymer (A) even with a rising temperature. When the compound (a1) contains the compound (a12), the ratio of the compound (a12) to the compound (a1) is, for example, greater than or equal to 0.1 mol% and less than or equal to 99 mol%.

The compound (a11) may contain at least one selected from the group consisting of, for example, monofunctional (meth)acrylic acid ester and monofunctional epoxy (meth)acrylate. More specifically, the compound (a11) contains at least one selected from the group consisting of, for example, (meth)acrylic acid vinyl and 2-hydroxy -3-phenoxy propyl acrylate.

Moreover, the compound (a12) may contain at least one selected from the group consisting of, for example, bi or more functional (meth)acrylic acid ester and bifunctional epoxy (meth)acrylate. In this case, the agent resistance of the film material can be particularly high. This is probably because the compound (a12) includes two or more ethylenically unsaturated bonds in one molecule, and the polymer (A) thus has a high cross-link density. More specifically, the compound (a12) may contain at least one selected from the group consisting of, for example, a bisphenol A diglycidyl ether (meth)acrylic acid adduct and a bisphenol A PO adduct diglycidyl ether (meth)acrylic acid adduct.

It is also preferable that the polymerizable compound (a) contains the compound (a2) containing zinc and an ethylenically unsaturated bond. In this case, polymerization of the polymerizable compound (a) including the compound (a1) and the compound (a2) enables the polymer (A) to include zinc derived from the compound (a2).

The compound (a2) preferably contains a compound (a21) including at least two ethylenically unsaturated bonds in one molecule. In this case, the agent resistance of the film material can be further increased. This is probably because the cross-link density of the polymer (A) can be increased.

The compound (a21) contains a compound including, for example, a zinc ion and a carboxylate anion group coordinated to the zinc ion. Specifically, the compound (a21) may contain at least one selected from the group consisting of, for example, (meth)acrylic acid zinc shown by the following formula and a zinc salt of mono(2-methacryloxyalkyl)phthalate. In the following formula, R is a hydrogen or a methyl group.

CH₂ = CR-CO-O-Zn-O-CO-CR = CH₂

When the film material contains zinc, a molar ratio of a total quantity of zinc in the film material to a total quantity of the reversible bonds in the polymer (A) is preferably greater than or equal to 0.01 and less than or equal to 0.3. When the molar ratio is greater than or equal to 0.01, heating enables the film material to more appropriately deform, and when the molar ratio is less than or equal to 0.3, the film material is less likely to be excessively deformed even with a rising temperature of the film material. This is probably because when the mole percentage of zinc is in the above-mentioned range, dissociation and recombination of the reversible bond due to the zinc at the time of heating are appropriately controllable. The molar ratio is more preferably greater than or equal to 0.05, and much more preferably greater than or equal to 0.1. Moreover, the molar ratio is more preferably less than or equal to 0.25 and much more preferably less than or equal to 0.2. When the polymerizable compound (a) includes the compound (a1) and the compound (a2), the ratio of each of the compound (a1) and the compound (a2) in the polymerizable compound (a) is preferably set such that the mole percentage of zinc is within the above-mentioned range.

The polymerizable compound (a) may further contain a compound (a3) including a carboxyl group and an ethylenically unsaturated bond in addition to the compound (a1) and the compound (a2). In this case, the agent resistance of the film material can be further improved. This is probably because coordination of the carboxyl group derived from the compound (a3) in the polymer (A) coordinated to zinc derived from the compound (a2) in the polymer (A) makes zinc less likely to be affected by an agent(s).

The compound (a3) contains at least one selected from the group consisting of, for example, methacryloyl oxyethyl-succinic acid, acryloyl oxyethyl-succinic acid, methacryloyl oxyethyl phthalic acid, acryloyl oxyethyl phthalic acid, methacryloyl oxyethyl hexahydro phthalic acid, acryloyl oxyethyl hexahydro phthalic acid, methacryloyl oxy propyl phthalic acid, acryloyl oxy propyl phthalic acid, methacryloyl oxy propyl hexahydro phthalic acid, and acryloyl oxy propyl hexahydro phthalic acid.

When the polymerizable compound (a) contains the compound (a3), the quantity of the compound (a3) in the polymerizable compound (a) is adjusted, for example, such that the percentage of the carboxyl group in the compound (a3) to the total quantity of zinc in the polymer (A) is higher than or equal to 0.1 mol% and lower than or equal to 50 mol%. The percentage of the carboxyl group is more preferably higher than or equal to 1 mol%, and much more preferably higher than or equal to 10 mol%. Further, the percentage of the carboxyl group is more preferably lower than or equal to 25 mol%, and much more preferably 20 mol%.

The polymerizable compound (a) may further contain a compound (a4) other than the compound (a1), the compound (a2), and the compound (a3). The compound (a4) has, for example, an ethylenically unsaturated bond and contains a compound (a41) including none of an ester bond, zinc, and a carboxyl group. The compound (a41) contains at least one selected from the group consisting of, for example, ethylene, propylene, styrene, vinyl chloride, vinylidene chloride, acrylonitrile, and allyl ether.

When the polymerizable compound (a) contains the compound (a4), the percentage of the compound (a4) to the total mass of the polymerizable compound (a) is for example, higher than or equal to 0.1 mass% and lower than or equal to 99 mass%. This percentage is more preferably higher than or equal to 1 mass%, and much more preferably higher than or equal to 10 mass%. Moreover, this percentage is more preferably lower than or equal to 90 mass%, and much more preferably lower than or equal to 80 mass%.

The polymerizable compound (a) may contain only the compound (a1), or the polymerizable compound (a) may contain the compound (a1) as its major component and the other components except for the compound (a1) may be, for example, only 10 mass% or lower in the polymerizable compound (a). The polymerizable compound (a) may contain only the compound (a1) and the compound (a2), or the polymerizable compound (a) may contain the compound (a1) and the compound (a2) as its major component and the other components except for the compound (a1) and the compound (a2) may be, for example, only 8 mass% or lower in the polymerizable compound (a). The polymerizable compound (a) may contain only the compound (a1), the compound (a2), and the compound (a3), or the polymerizable compound (a) may contain the compound (a1), the compound (a2), and the compound (a3) as its major component, and the other components except for the compound (a1), the compound (a2), and the compound (a3) may be, for example, 7 mass% or lower in the polymerizable compound (a). The polymerizable compound (a) may contain only the compound (a1), the compound (a2), and the compound (a4), or the polymerizable compound (a) may contain the compound (a1), the compound (a2), and the compound (a4) as its major component, and the other components except for the compound (a1), the compound (a2), and the compound (a4) may be, for example, only 5 mass% or lower in the polymerizable compound (a). The polymerizable compound (a) may contain the compound (a1), the compound (a2), the compound (a3), and the compound (a4).

The polymer (A) can be synthesized by polymerizing the polymerizable compound (a) by an appropriate method. For example, the polymerizable compound (a) is mixed by heating as necessary, and subsequently, a radical polymerization initiator is added to the polymerizable compound (a), thereby preparing a curable composition containing the polymerizable compound (a) and the radical polymerization initiator. The curable composition may contain an appropriate additive selected from the group consisting of, for example, a filler, a thixotropy imparting agent, an anti-aging agent, an antistatic agent, a fire retarding agent, a thermal conductivity improving agent, a plasticizer, an anti-sagging agent, an antifouling agent, an antiseptic agent, a germicidal agent, a defoaming agent, a levelling agent, a hardener, a thickener, a pigment dispersant, and a silane coupling agent as necessary.

The curable composition is molded by an appropriate method, thereby producing a film material.

For example, the curable composition is applied to an appropriate base material to form a coating film, the coating film is dried as necessary, and the coating film is further cured by a method according to the type of the radical polymerization initiator. For example, when the radical polymerization initiator is a light-induced radical polymerization initiator, the coating film is irradiated with ultraviolet light or the like, and thereby, the coating film is cured. When the radical polymerization initiator is a thermal radical polymerization initiator, the coating film is heated, and thereby, the coating film is cured. Thus, the polymer (A) is synthesized, and a film material containing the polymer (A) can be produced.

Moreover, for example, when the radical polymerization initiator is the thermal radical polymerization initiator, the curable composition is cast molded and cured by heating. Thus, the polymer (A) is synthesized, and a film material containing the polymer (A) can be produced.

Note that a method of synthesizing the polymer (A) and a method of producing the film material are not limited to the above example. For example, the polymer (A) may be synthesized from the polymerizable compound (a) by a solution polymerization method, thereby preparing a solvent solution containing the polymer (A), and the solvent solution may be applied onto an appropriate base material and is then dried to produce a film material.

The laminated material according to the present embodiment includes a base material containing a thermoplastic resin and the film material on the base material.

The base material is, for example, a film made of a thermoplastic resin. The thermoplastic resin contains at least one selected from the group consisting of, for example, polycarbonate, polyethylene, polypropylene, polyester, polyethylene terephthalate, polymethyl methacrylate, polyamide, polyimide, polyvinyl chloride, polyvinylidene chloride, polyvinyl alcohol, polystyrene, and polyacrylonitrile. The base material is obtained by, for example, molding the thermoplastic resin into a film shape. The thickness of the base material is, for example, greater than or equal to 0.01 mm and less than or equal to 10 mm.

When the laminated material is produced, for example, the film material is produced on the base material by the above-described method. Moreover, the film material may be bonded to the base material by an adhesive or the like.

The laminated material may further include a layer other than the base material and the film material. For example, the laminated material may include at least one selected from the group consisting of an adhesive layer, a coloring layer, an ultraviolet absorbing layer, and an antireflection layer.

The film material and the laminated material are, for example, for lamination. That is, for example, a surface of an appropriate product is laminated with the film material or the laminated material. Thus, the product whose outer surface is laminated with the film material or the laminated material is obtained. In this case, the film material or the laminated material is used, for example, as a decorative film but is not limited to this example.

The product is laminated with the film material or the laminated material while the film material or the laminated material is heated by an appropriate molding method. The molding method is, for example, thermal high-pressure molding, insert molding, in-molding, compressed air molding, vacuum molding, extrusion molding, three-dimensional lamination molding (NGF molding, TOM molding, or the like) or stamping molding but is not limited to these examples. When a product is laminated with the laminated material, the product is laminated with the laminated material such that the base material of the base material and the film material faces the outer surface of the product.

In the present embodiment, when an outer surface of a product is laminated with the film material or the laminated material while the film material or the laminated material is heated, the film material easily deforms along the shape of the outer surface of the product but is suppressed from excessively deforming even with a rising temperature. Therefore, the film material is easily formed to have a shape along the shape of the outer surface of the product, and a defect, such as an excessively reduced thickness of the film material or breakoff of the film material, is unlikely to be caused. Moreover, cooling after the lamination with the film material enables the film material to have an appropriate hardness and good agent resistance.

### Examples

More specific examples of the present embodiment will be presented below. Note that the present embodiment is not limited to only the examples described below.

### 1. Measurement of Storage Elastic Modulus and Glass Transition Temperature

Raw materials shown in "Raw Material Composition" in Table 1 were mixed to obtain a mixture. Note that in the raw materials, "bisphenol A PO 2 mol adduct diglycidyl ether methacrylic acid adduct" is bifunctional epoxy methacrylate obtained by a chemical reaction between the product named EPOLIGHT 3002 (N) (bisphenol APO 2 mol adduct diglycidyl ether) manufactured by KYOEISHA CHEMICAL Co., Ltd. and methacrylic acid. Moreover, zinc methacrylate (ZN-MA-5(Zn = 0.205)) is zinc methacrylate, item number ZN-MA-5, zinc content percentage: 20.5 mass%, manufactured by ASADA CHEMICAL INDUSTRY CO., LTD.

Note that "Molar Number of Ester Bond" and "Molar Number of Carboxyl Group" in the raw material composition in Table 1 show the quantities of the ester bond and the carboxyl group each in the raw material thus used in molar number, and, for example, regarding 2-hydroxy-3-phenoxy propyl acrylate of Example 1, the molar number of the ester bond in 10 g of 2-hydroxy-3-phenoxy propyl acrylate thus used is 0.0450.

The mixture was heated at 165°C for 1 hour while being stirred by a stirrer in a glass container. Subsequently, the mixture was cooled to 100°C, and then, a thermal radical initiator (manufactured by NOF CORPORATION, product name: PERCUMYL D) was then added to the mixture at a ratio of 0.3 mass% to the mixture, and thereafter, the mixture was further stirred, thereby obtaining a curable composition. The curable composition was injected into a mold and was cured by heating at 130°C for 1 hour, and then, the mold was cooled. Thus, the film material having a thickness of 1 mm was produced.

From the film material, a sample having a dimension of 8 × 50 × 1 mm was cut out. The storage elastic modulus and the loss elastic modulus of the sample were measured by using a viscoelastic measurement device (manufactured by Hitachi High-Technologies Corporation., model number: DMS6220) in an atmosphere, under atmospheric pressure, and with 65% humidity under conditions with the measurement mode of bending (supported beam), a measurement temperature range from 25°C to 200°C, and a rate of temperature rise of 10°C /min.

From the measurement explained above, a relationship curve of a loss coefficient tanδ which is the ratio of the storage elastic modulus to the loss elastic modulus and a temperature was obtained. In the relationship curve, a temperature at the peak of the loss coefficient tanδ was defined as the glass transition temperature.

Moreover, from the measurement explained above, a relationship curve between the storage viscoelastic and the temperature was obtained. From the relationship curve, a storage elastic modulus (E'₅₀) at a temperature higher than the glass transition temperature by 50°C and a storage elastic modulus (E'₁₀₀) at a temperature higher than the glass transition temperature by 100°C were read.

These results are shown in Table 1.

### 2. Agent Resistance

A film material having a thickness of 1 mm was produced by a method the same as that in the "1. Measurement of Storage Elastic Modulus and Glass Transition Temperature". From the film material, a sample having a mass of 50 mg was cut out. In a state where the sample was immersed in acetone, an ultrasonic wave washer (manufactured by AS ONE corporation, item number: powerful-type VS-150) was used to apply an ultrasonic wave to the sample at 25°C for 30 minutes. Subsequently, the sample was observed visually. As a result, a case where the exterior of the sample unchanged was evaluated as satisfactory, and a case where the sample swollen or melted was evaluated as unsatisfactory.

### 3. Moldability

The mixture obtained by mixing the raw materials shown in the raw material composition in Table 1 was heated at 165°C for 1 hour while being stirred by a stirrer in a glass container. Subsequently, the mixture was cooled to 100°C or lower, and then, a light-induced radical initiator (manufactured by IGM Resins B.V, product name: Omnirad 1173) was added to the mixture at a ratio of 1.0 mass% to the mixture, and thereafter, the mixture was further stirred, thereby obtaining a curable composition. The curable composition was applied to an entire surface of a base material having a dimension of 20 mm × 80 mm in plan view, having a thickness of 2 mm, and made of polycarbonate by using a bar coater, thereby producing a coating film. The coating film was irradiated with ultraviolet light having a peak wavelength of 365 nm by using an ultraviolet irradiator (manufactured by Multiply Co., Ltd., model number: MEP-061NW-B2) under conditions with an irradiation intensity of 230 mW/cm² and an accumulated light quantity of 1400 mJ/cm². Thus, a laminated material including the base material made of polycarbonate and a film material having a thickness of 20 µm on the base material was obtained.

In a thermostat at a temperature of 165°C, a tension test of the laminated material was performed by using a tension testing machine under conditions with a pulling speed of 50 mm/min and an initial distance of 30 mm between chucks. Note that the chucks were fixed at locations separate from respective ends on both sides in the longitudinal direction of the laminated material by 25 cm such that the distance between the chucks was 30 cm. At a time point at which the distance between the chucks reached 60 mm, the test was ended, and the film material of laminated material was observed by optical microscope. As a result, a case where neither a crack(s) nor significant non-uniformity of the thickness was observed in the film material was evaluated as "A", a case where significant non-uniformity of the thickness was observed in the film material was evaluated as "B", and a case where a crack(s) was observed in the film material was evaluated as "C".

**[Table 1]**

| | | | Examples | | | | | Comparative Examples |
|---|---|---|---|---|---|---|---|---|
| | | | 1 | 2 | 3 | 4 | 5 | |
| Raw Material Composition | 2-hydroxy - 3-phenoxy propyl acrylate | Amount of Incorporation/g | 10.00 | 10.00 | 10.00 | 2.63 | 5.25 | 10.00 |
| | | Molar Number of Ester Bond | 0.0450 | 0.0450 | 0.0450 | 0.0118 | 0.0236 | 0.0450 |
| | Bisphenol A PO 2 mol adduct methacrylic acid adduct | Amount of Incorporation /g | 0.00 | 0.00 | 0.00 | 7.50 | 7.50 | 0.00 |
| | | Molar Number of Ester Bond | - | - | - | 0.0239 | 0.0239 | - |
| | Zinc Methacrylate (ZN-MA-5 (Zn=0.205)) | Amount of Incorporation /g | 4.31 | 2.87 | 1.44 | 1.14 | 1.52 | 0.00 |
| | | Molar Number of Metal Ion (Zinc Ion) | 0.0135 | 0.0090 | 0.0045 | 0.0036 | 0.0048 | - |
| | | Molar Number of Carboxyl Group | 0.0270 | 0.0180 | 0.0090 | 0.0071 | 0.0095 | - |
| Total Molar Number of Carboxyl Group | | | 0.0270 | 0.0180 | 0.0090 | 0.0071 | 0.0095 | - |
| Total Molar Number of Ester Bond | | | 0.0450 | 0.0450 | 0.0450 | 0.0357 | 0.0475 | 0.0450 |
| Total Molar Number of Metal Ion (Zinc Ion) | | | 0.0135 | 0.0090 | 0.0045 | 0.0036 | 0.0048 | - |
| Zinc/Ester Bond Molar Ratio | | | 0.3 | 0.2 | 0.1 | 0.1 | 0.1 | - |
| Evaluation Result | Glass Transition Temperature / °C | | 61 | 60.6 | 49.8 | 67.6 | 61.2 | 48 |
| | E'50 / MPa | | 82 | 41 | 11.7 | 20 | 19 | 0.18 |
| | E'100 / MPa | | 37 | 27 | 4.8 | 21 | 20 | 0.12 |
| | Agent Resistance | | Satisfactory | Satisfactory | Satisfactory | Satisfactory | Satisfactory | Unsatisfactory |
| | Moldability | | A | A | A | A | A | B |

Thus, as can be seen from the embodiment and examples, a film material of a first aspect of the present disclosure includes a polymer (A) being amorphous and including a reversible bond which is reversibly dissociated and recombined in response to a temperature change, the polymer (A) has a glass transition temperature of higher than or equal to 40°C, the polymer (A) has a storage elastic modulus of greater than or equal to 0.2 MPa at a temperature higher than the glass transition temperature by 100°C and a storage elastic modulus of less than or equal to 100 MPa at a temperature higher than the glass transition temperature by 50°C.

According to the first aspect, a film material capable of developing good moldability when heated is obtained.

In a film material of a second aspect of the present disclosure referring to the first aspect, the storage elastic modulus of the polymer (A) at the temperature higher than the glass transition temperature by 50°C is less than or equal to 20 MPa.

According to the second aspect, the film material is capable of developing better moldability.

In a film material of a third aspect of the present disclosure referring to the first or second aspect, the reversible bond is an ester bond.

According to the third aspect, the film material is capable of developing better moldability.

In a film material of a fourth aspect of the present disclosure referring to any one of the first to third aspects, the film material contains zinc.

According to the fourth aspect, the film material is capable of developing better moldability.

In a film material of a fifth aspect of the present disclosure referring to the fourth aspect, the polymer (A) includes zinc.

According to the fifth aspect, the film material is capable of developing better moldability.

In a film material of a sixth aspect of the present disclosure referring to the fifth aspect, the polymer (A) includes a zinc ion as the zinc and a carboxylate anion group coordinated to the zinc ion.

According to the sixth aspect, the film material is capable of developing better moldability.

In a film material according to a seventh aspect of the present disclosure referring to the fifth or sixth aspect, a molar ratio of a total quantity of the zinc to a total quantity of the reversible bond in the polymer (A) is greater than or equal to 0.01 and less than or equal to 0.3.

According to the seventh aspect, the film material is capable of developing better moldability.

In a film material of an eighth aspect of the present disclosure referring to any one of the first to seventh aspects, the polymer (A) includes a hydroxyl group.

According to the eighth aspect, the film material is capable of developing better moldability.

In a film material of a ninth aspect of the present disclosure referring to any one of the first to eighth aspects, the polymer (A) is a polymer of a polymerizable compound (a) containing a compound (a1) including an ester bond and an ethylenically unsaturated bond.

According to the ninth aspect, the film material is capable of developing better moldability.

In a film material of a tenth aspect of the present disclosure referring to the ninth aspect, the compound (a1) contains a compound including a hydroxyl group.

According to the tenth aspect, the film material is capable of developing better moldability.

In a film material according to an eleventh aspect of the present disclosure referring to the ninth or tenth aspect, the compound (a1) contains a compound (a12) including at least two ester bonds.

According to the eleventh aspect, the film material is capable of developing better moldability.

In a film material of a twelfth aspect of the present disclosure referring to any one of the ninth to eleventh aspects, the polymerizable compound (a) further contains a compound (a2) including zinc and an ethylenically unsaturated bond.

According to the twelfth aspect, the film material is capable of developing better moldability.

In a film material of a thirteenth aspect of the present disclosure referring to the twelfth aspect, the compound (a2) contains a compound (a21) including at least two ethylenically unsaturated bonds.

According to the thirteenth aspect, the film material is capable of developing better moldability.

In a film material of a fourteenth aspect of the present disclosure referring to any one of the first to thirteenth aspects, the film material is used for lamination.

According to the fourteenth aspect, when an outer surface of a product is laminated with the film material, the film material is easily formed into a shape along the shape of the outer surface of the product, and a defect is unlikely to be caused in the film material.

A laminated material of a fifteenth aspect of the present disclosure includes: a base material containing a thermoplastic resin; and the film material of any one of the first to fourteenth aspects, the film material being on the base material.

According to the fifteenth aspect, the laminated material including the film material is obtained, the film material being configured to develop good moldability when heated.

## Claims

1. A film material comprising a polymer (A) being amorphous and including a reversible bond which is reversibly dissociated and recombined in response to a temperature change,
the polymer (A) having a glass transition temperature of higher than or equal to 40°C,
the polymer (A) having a storage elastic modulus of greater than or equal to 0.2 MPa at a temperature higher than the glass transition temperature by 100°C and a storage elastic modulus of less than or equal to 100 MPa at a temperature higher than the glass transition temperature by 50°C.

2. The film material of claim 1, wherein
the storage elastic modulus of the polymer (A) at the temperature higher than the glass transition temperature by 50°C is less than or equal to 20 MPa

3. The film material of claim 1 or 2, wherein
the reversible bond is an ester bond.

4. The film material of any one of claims 1 to 3, wherein
the film material contains zinc.

5. The film material of claim 4, wherein
the polymer (A) includes zinc.

6. The film material of claim 5, wherein
the polymer (A) includes a zinc ion as the zinc and a carboxylate anion group coordinated to the zinc ion.

7. The film material of claim 5 or 6, wherein
a molar ratio of a total quantity of the zinc to a total quantity of the reversible bond in the polymer (A) is greater than or equal to 0.01 and less than or equal to 0.3.

8. The film material of any one of claims 1 to 7, wherein
the polymer (A) includes a hydroxyl group.

9. The film material of any one of claims claim 1 to 8, wherein
the polymer (A) is a polymer of a polymerizable compound (a) containing a compound (a1) including an ester bond and an ethylenically unsaturated bond.

10. The film material of claim 9, wherein
the compound (a1) contains compound including a hydroxyl group.

11. The film material of claim 9 or 10, wherein
the compound (a1) contains a compound (a12) including at least two ester bonds.

12. The film material of any one of claims 9 to 11, wherein
the polymerizable compound (a) further contains a compound (a2) including zinc and an ethylenically unsaturated bond.

13. The film material of claim 12, wherein
the compound (a2) contains a compound (a21) including at least two ethylenically unsaturated bonds.

14. The film material of any one of claims 1 to 13, wherein
the film material is used for lamination.

15. A laminated material comprising:
a base material containing a thermoplastic resin; and
the film material of any one of claims 1 to 14, the film material being on the base material.
